# EUROPEAN PATENT APPLICATION

(11) **EP 2 765 485 A1**
(43) Date of publication of application: **13.08.2014**
(21) Application number: 13167188.5
(22) Date of filing: 09.05.2013
(51) Int. Cl.: G06F 3/02, H01H 13/83, H04M 1/22

(54) **Luminescent keyboard and light-guide board thereof**

(30) Priority: 08.02.2013 TW 102105092
(71) Applicant: Giga-Byte Technology Co., Ltd., New Taipei City 231 (TW)
(72) Inventor: Chen, Shu I, New Taipei City 231 (TW); Shih, Po Jen, New Taipei City 231 (TW)
(74) Representative: Schwerbrock, Florian

(57) **Abstract**

A luminescent keyboard (100) includes a light-guide board (110), a thin-film circuit board (120), a key module (130) and at least one light-emitting component (140). The thin-film circuit board (120) is disposed on the light-guide board (110). The key module (130) is disposed on the thin-film circuit board (120). The light-emitting component (140) is disposed at a position corresponding to one side of the light-guide board (110). The light-guide board (110) includes a body (111) and a plurality of light-guiding structures. The light-guiding structures are disposed on the body (111) and respectively located at positions corresponding to the keys (131) of the key module (130). The light-emitting component (140) emits light toward the light-guide board (110), such that the light diffuses in the body (111) and the light-guide structures (112) and is guided to the keys (131) by the light-guide structures (112), so as to enhance the brightness and uniform illumination of the luminescent keyboard (100) and lowers the cost of the luminescent keyboard (100).

## Description

### BACKGROUND

### Technical Field

This disclosure relates to a keyboard, and more particularly to a luminescent keyboard.

### Related Art

With the rapid development of the 3C products, keyboards have become one of the most common input devices. From the consumer electronics in the daily life to the large-scale manufacturing instruments used in the industry, keyboards are generally used to input data and operating commands. However, with the changes in work patterns, many staffs need to face the monitors and keyboards in different environments. For example, when using keyboards in low light environment, users can not clearly recognize the numbers and characters on the keys of the keyboards, resulting in operation mistakes and the users suffering reduced vision. Currently, there are keyboards with light-emitting function. In addition to solving the problem of insufficient lighting, visual effects can be more attractive to users.

In the art, there are two light-guide methods utilized in the luminescent keyboards. One light-guide method is disposing the back light module under the key module. The back light module includes at least one light-emitting component, a reflective board, a light-guide substrate, and an optical diaphragm. Most of the back light modules applying to keyboards are edge-light type back light modules. In an edge-light type back light module, the light-emitting component is disposed on the edge of the light-guide substrate. After the light generated by light-emitting component enters the light-guide substrate, by the dot patterns or micro-structures on the bottom of the light-guide substrate, the light is guided to the keys of the key modules. Usually, uniform illumination to each key is hard to achieved by edge-light type Furthermore, the light-guide substrate, the reflecting board, and the optical diaphragm are stacked together, such that the overall thickness of the luminescent keyboard are increased and the cost of the luminescent keyboard is raised.

Another light-guide method is to dispose light-emitting components under each keys of the key module. The brightness of the light-guide method is lighter than that in the previous method, while the required light-emitting components are more. Furthermore, the overall thickness of the luminescent keyboard after the light emitting components are stacked is thicker, power consumption is larger, heat dissipation is not easy, and the cost is higher.

The brightness, uniform illumination, and the cost of the luminescent keyboard are all important demands on the design and the manufacture of the luminescent keyboard. Therefore, how to effectively enhance the brightness and uniform illumination and reduce the cost is an important issue about current design and develop of the luminescent keyboard.

### SUMMARY OF THIS DISCLOSURE

In view of the above problems, this disclosure provides an illumination structure to enhance the brightness and the uniform illumination and to reduce the cost of the luminescent keyboard.

The luminescent keyboard includes a light-guide board, a thin-film circuit board, a key module, and at least one light-emitting component. The light-guide board includes a body and a plurality of light-guide structures disposed on the body. The thin-film circuit board is disposed on the light-guide structures of the light-guide board and is made of transparent material. The key module is disposed on the thin-film circuit board and includes a plurality of keys. Each of the light-emitting components is disposed at a position corresponding to one side of the body; the light-emitting component emits light toward the body, and then the light diffuses in the body and the light-guide structures and is guided to the keys by the light-guide structures.

The light-guide board of the luminescent keyboard has different implementations according to different needs. In one or more embodiment, one side of each of the light-guide structures of the light-guide board corresponding to one side surface of the keys is matte structure. In another embodiment, each light-guide structure includes a plurality of slots, the slots are disposed with intervals with each other on the light-guide structure and divide the light-guide structure into a plurality of sub-light-guide structures, and the sub-light-guide structures respectively correspond to the keys. In yet another embodiment, at least one notch is disposed on the side of the light-guide board, so as to dispose the light-emitting component in the notch. In yet another embodiment, the light-guide board further includes a light-reflective layer. Furthermore, the light-reflective layer covers the surface of the body.

In one or more embodiment, the material of the light-guide board is acrylic or optical plastic.

In one or more embodiment, the structure of the luminescent keyboard is a monolithic structure.

This disclosure also provides a light-guide board, which applies to a luminescent keyboard. The luminescent keyboard includes a plurality of keys and at least one light-emitting component. The light-emitting board includes a body, a plurality of light-guide structures. The light-guide structures are disposed on the body and correspond to the keys. When the light-emitting component emits light to the body, the light diffuses in the body and the light-guide structure and is guided to the keys by the light-guide structures.

The light-guide board of the luminescent keyboard has different implementations according to different needs. In one or more embodiment, one side of each of the light-guide structures of the light-guide board corresponding to one side surface of the keys is matte structure. In another embodiment, each light-guide structure includes a plurality of slots, the slots are disposed with intervals with each other on the light-guide structure and divide the light-guide structure into a plurality of sub-light-guide structures, and the sub-light-guide structures respectively correspond to the keys. In yet another embodiment, at least one notch is disposed on the side of the light-guide board, so as to dispose the light-emitting component in the notch. In yet another embodiment, the light-guide board further includes a light-reflective layer. Furthermore, the light-reflective layer covers the surface of the body.

In one or more embodiment, the material of the light-guide board is acrylic or optical plastic.

In one or more embodiment, the structure of the luminescent keyboard is a monolithic structure.

Through the body and the light-guide structures corresponding to the keys and disposed on the body, the light is uniformly guided to each key so that the brightness and the uniform illumination of the luminescent keyboard are enhanced. Besides, by omitting the optimal diaphragm and the refractive board, the cost of the luminescent keyboard is reduced.

The detail of this disclosure can be better appreciated from the following detailed description of this disclosure, taken in conjunction with the attached drawings.

### BRIEF DESCRIPTION OF THE DRAWINGS

This disclosure will become more fully understood from the detailed description given herein below for illustration only, and thus not limitative of this disclosure, wherein:
FIG. 1 is an exploded view of the luminescent keyboard according to a first embodiment.
FIG. 2 is a perspective view of the light-guide board of the luminescent keyboard according to the first embodiment.
FIG. 3 is a cross-sectional view of the luminescent keyboard according to the first embodiment.
FIG. 4 is an exploded view of the luminescent keyboard according to a second embodiment.
FIG. 5 is a perspective view of the light-guide board of the luminescent keyboard according to the second embodiment.
FIG. 6 is a cross-sectional view of the luminescent keyboard according to the second embodiment.

### DETAILED DESCRIPTION OF THE DISCLOSURE

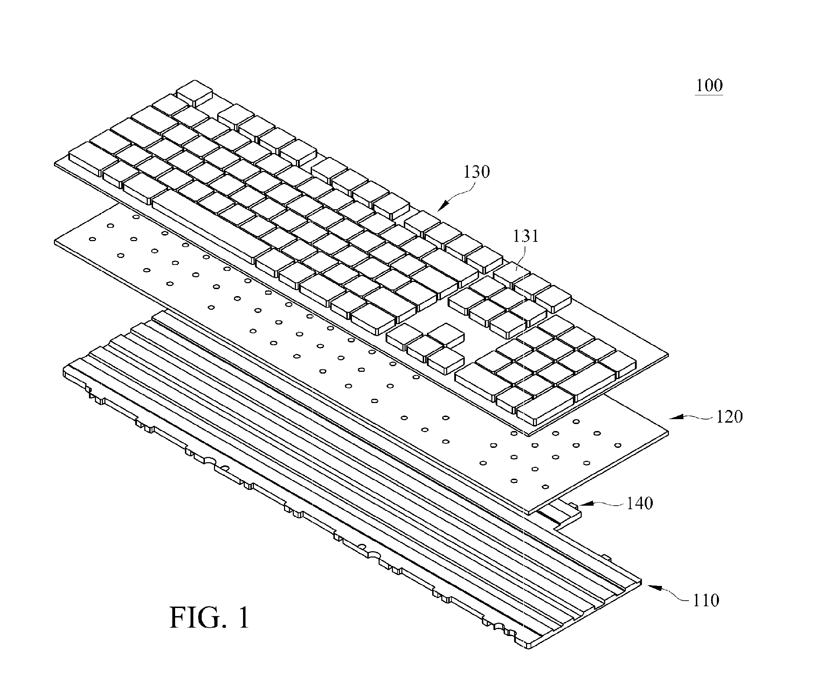

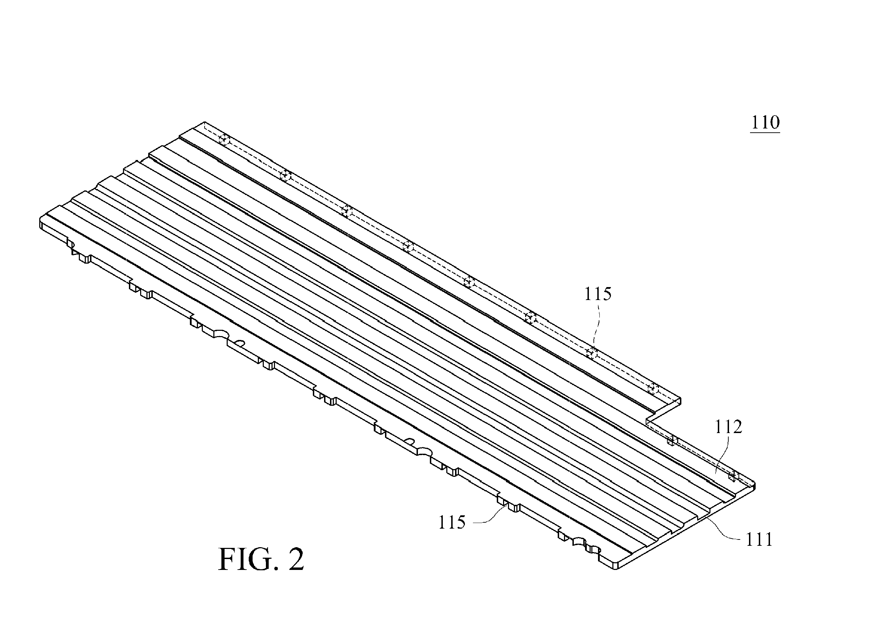

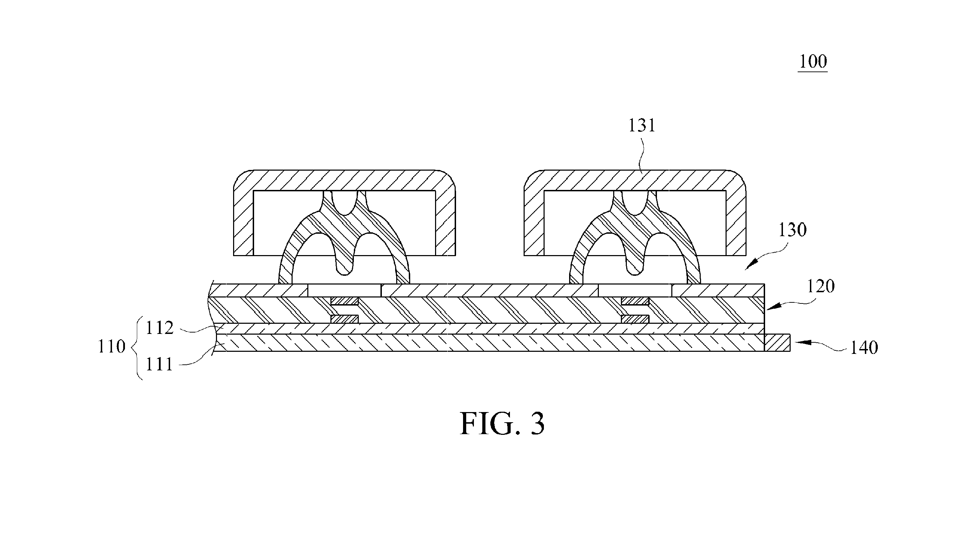

Refer to FIG. 1, FIG. 2, and FIG. 3, a luminescent keyboard 100 includes a light-guide board 110, a thin-film circuit board 120, a key module 130, and at least one light-emitting component 140.

The light-guide board 110 is made of transparent or translucent plasticity materials, such as acrylic, optical plastic, or materials having high transmittance, so as to enhance the use efficiency of light. The light-guide board 110 includes a body 111 and a plurality of light-guide structures 112, and the body 111 and the light-guide structures 112 is but not limit to a monolithic structure. The body 111 has a longitudinal direction and a transversal direction perpendicular to each other. The light-guide structures 112 are disposed with intervals with each other along the transversal direction on the body 111 and extend along the longitudinal direction.

The thin-film circuit board 120 is disposed on the light-guide structures 112 of the light-guide board 110. The thin-film circuit board 120 is made of transparent material, such as polyethylene terephthalate (PET), so as to make the light pass through. The thin-film circuit board 120 is similar to that of common luminescent keyboards, which is known by people having ordinary skill in the art; the detail description of the thin-film circuit board 120 is omitted hereinafter.

The key module 130 is disposed on the thin-film circuit board 120. The key module 130 includes a plurality of keys 131 respectively located corresponding to the light-guide structures 112, and the keys 131 are disposed in rows on the thin-film circuit board 120, and keys 131 of each row correspond to each light-guide structure 112.

The light-emitting component 140 is but not limits to light-emitting diodes. The light-emitting component 140 is disposed at a position corresponding to one side of the body 111 of the light-guide board 110, so as to emit light toward the body 111. People having ordinary skill in the art can make proper modification to number and configuration of the light-emitting component 140 according to the actual needs or design requirements, not limited as described herein. For example, to dispose a plurality of light-emitting components 130 in a strip form on one side of the body 111, or to dispose a plurality of light-emitting components 140 respectively along the longitudinal direction and transversal direction on the two adjacent sides of the body 111. Besides, in order to focus emitting light toward the body 111, notches 115 are disposed on the side of the body 111, and the notches 115 can have different disposition pattern on the side of the body 111 according to different needs. Meanwhile, the number of the notches 115 corresponds to the number of the light-emitting components 140, so as to accommodate and fix the light-emitting component 140 to the body 111.

When the light-emitting component 140 emits light toward the light-guide board 110 of the body 111, the light diffuses in the body 111 and is guided to the light-guide structures 112 through the body 111, and then the light is guided to the keys 131 of the key module 130 through the light-guide structures 112. One side surface corresponding to the keys 131 of each light-guide structure 112 is a light exiting surface. The light is emitted on the keys 131 through the light exiting surface, so as to make the keys 131 bright and easy to recognize. Besides, in order to enhance uniform illumination on the light exiting surfaces of the light-guide structures 112, the light exiting surfaces could be matte structure, such that the light are distributed homogeneous on the light exiting surface through the refraction made by the matte structure and that light is emitted homogeneously on the keys 131.

The design about light-guide structure and light-guide board effectively focuses light to the keys and enhances the brightness and uniform illumination of the luminescent keyboard. Besides, this disclosure simplifies the structure of the luminescent keyboard and reduces the number of the light-emitting components and optical films of the prior art, reducing the cost of the luminescent keyboard.

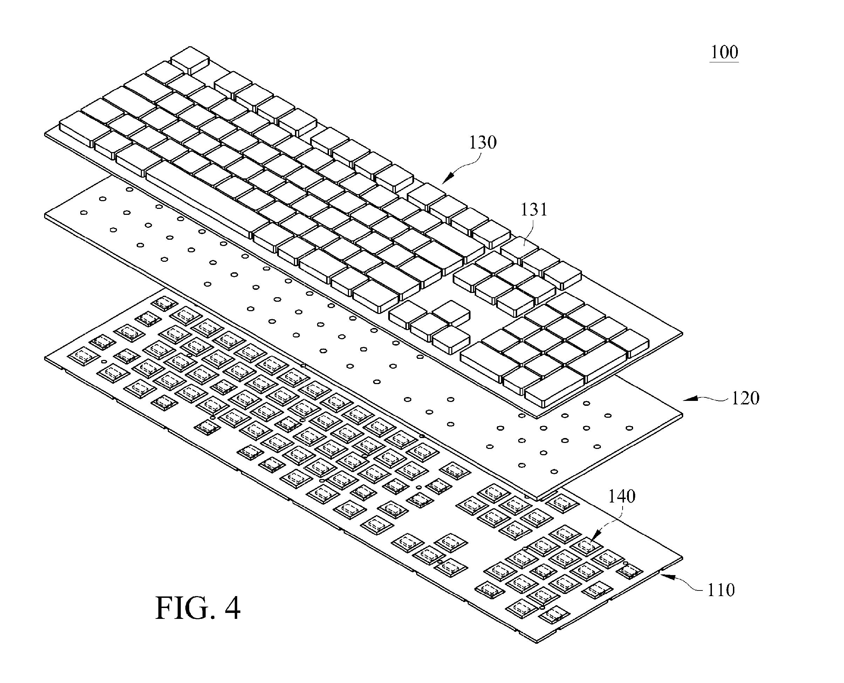

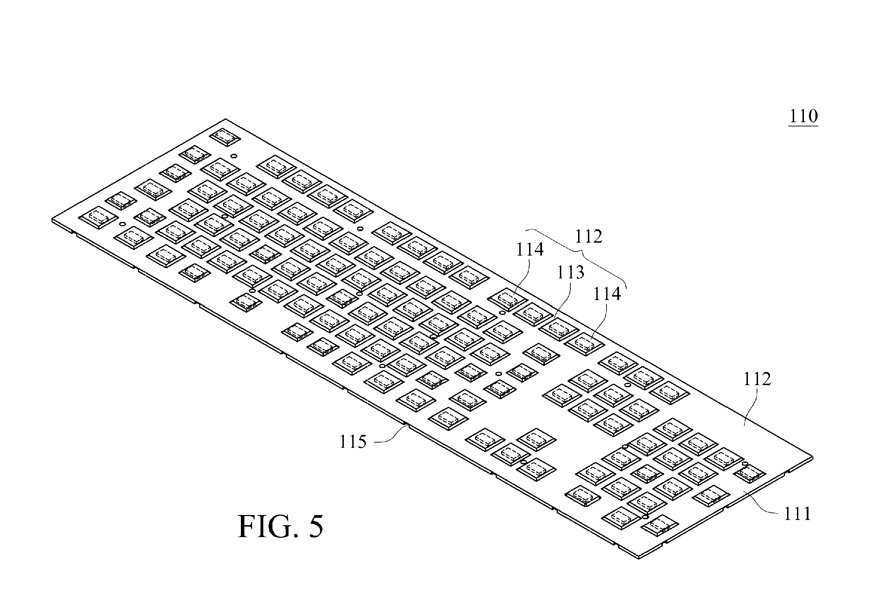

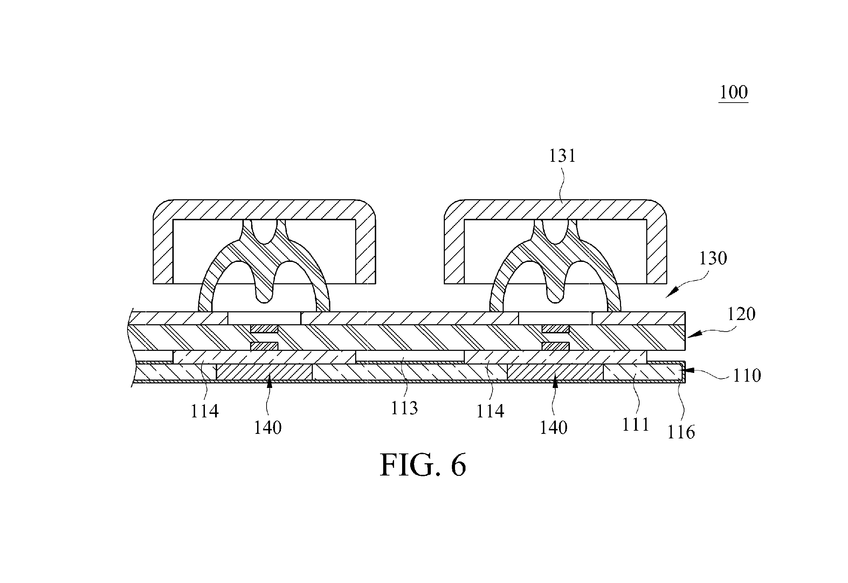

Refer to FIG. 4 to FIG. 6, the structure in the second embodiment is similar to that in the first embodiment. The difference of the two is that each light-guide structure 112 of the light-guide board 110 of the luminescent keyboard 100 in the second embodiment further includes a plurality of slots 113. The slots 113 are disposed with intervals with each other on the light-guide structures 112 and divide the light-guide structure into a plurality of sub-light-guide structures 114. The sub-light-guide structures 114 respectively correspond to the keys 131, such that all sub-light-guide structures 114 on the light-guide structures of the body 111 correspond to all keys 131 of the key module 130 in an one-to-one manner. In other words, every key 131 has a solely corresponding sub-light-guide structure 114.

Therefore, when light-emitting components 140 emit light to the body 111 of the light-guide board 110, the light can be focused to the sub-light-guide structures 114 and be emitted to all keys 131, so as to respectively illuminate the corresponding position of the keys 131. In this way, the illumination of the luminescent keyboard 100 is enhanced.

In order to intensively focus emitting light on the light exiting surface and on the keys 131, a light-reflective layer 116 is disposed on the body 111 of the light-guide board 110 in the third embodiment. The light-reflective layer 116 is formed by coating or covering reflective coatings or other materials with high reflectivity on the surface of the body 111.

Take reflective paint coated on the surface of the body 111 being light-reflective layer 116 as an illustration. The light-reflective layer 116 mainly covers the surface of the body 111 and avoids the positions of the light-guide structures 112 and the notches 115, such that the light-emitting components 140 are able to emit light to the body 111 of the light-guide board 110 in the notches 115 and that scattering light is reflected back to the light-guide board 110 through the light-reflective layer 116, which reduces the loss of light. Then, the light is focused to emit to each keys 131 from the light exiting surfaces of the light-guide structures 112, so as to enhance the brightness strength of the light on the keys and to enhance the luminous efficiency of the luminescent keyboard 100.

Therefore, in the luminescent keyboard of this disclosure, the body of the light-guide board is able to guide light to the light-guide structures, and then light is emitted on each key or key on the same row through the light-guide structures, so as to effectively focus light to the keys and to enhance luminous efficiency, brightness and uniform illumination of the luminescent keyboard. Besides, by omitting the optimal diaphragm and the reflecting board of the prior art, the structure of the luminescent keyboard is simplified, and the cost of the luminescent keyboard is reduced.

Though the embodiments of this disclosure are disclosed as described above, this is not to limit this disclosure. People having ordinary skill in the art will recognize that this disclosure can be practiced with modification within the spirit and scope of the claim. It is therefore to be understood that this disclosure is not to be limited by the foregoing description but only by the appended claims.

## Claims

1. A luminescent keyboard (100), comprising:
a light-guide board (110), including a body (111) and a plurality of light-guide structures (112) disposed on the body (111);
a thin-film circuit board (120), disposed on the light-guide structures (112) of the light-guide board (110), wherein the thin-film circuit board (120) is made of transparent material;
a key module (130), disposed on the thin-film circuit board (120), wherein the key module (130) includes a plurality of keys (131), and the keys (131) are respectively located at positions corresponding to the light-guide structures (112); and
at least one light-emitting component (140), disposed at a position corresponding to one side of the body (111), for emitting light toward the body (111), wherein the light diffuses in the body (111) and the light-guide structures (112) and is guided to the keys (131) by the light-guide structures (112).

2. The luminescent keyboard (100) as claimed in Claim 1, wherein one side surface of each of the light-guide structures (112) of the light-guide board (110) corresponding to the keys (131) is matte structure.

3. The luminescent keyboard (100) as claimed in Claim 1, wherein each of the light-guide structures (112) includes a plurality of slots, the slots (113) are disposed with intervals with each other on the light-guide structures (112) and divide the light-guide structure (112) into a plurality of sub-light-guide structures (114), and the sub-light-guide structures (114) are respectively located corresponding to the keys (131).

4. The luminescent keyboard (100) as claimed in Claim 1, wherein at least one notch (115) is disposed on the side of the body (111), and the light-emitting component (140) is disposed in the notch (115).

5. The luminescent keyboard (100) as claimed in Claim 1, wherein the light-guide board (110) further includes a light-reflective layer (116), and the light-reflective layer (116) covers the surface of the body (111).

6. The luminescent keyboard (100) as claimed in Claim 1, wherein the material of the light-guide board (110) is made of acrylic or optical plastic.

7. The luminescent keyboard (100) as claimed in Claim 1, wherein the light-guide board (110) is a monolithic structure.

8. A light-guide board (110), applying to a luminescent keyboard (100), wherein the luminescent keyboard (100) includes a plurality of keys (131) and at least one light-emitting component (140), comprising:
a body (111); and
a plurality of light-guide structures (112), disposed on the body (111) and respectively located at positions corresponding to the keys (131); wherein when the light-emitting component (140) emits light to the body (111), the light diffuses in the body (111) and the light-guide structures (112) and is guided to the keys (131) by the light-guide structures (112).

9. The light-guide board (110) as claimed in Claim 8, wherein one side surface of each of the light-guide structures (112) of the light-guide board (110) corresponding to the keys (131) is matte structure.

10. The light-guide board (110) as claimed in Claim 8, wherein each of the light-guide structures (112) includes a plurality of slots, the slots (113) are disposed with intervals with each other on the light-guide structures (112) and divide the light-guide structure (112) into a plurality of sub-light-guide structures (114), and the sub-light-guide structures (114) are respectively located corresponding to the keys (131).

11. The light-guide board (110) as claimed in Claim 8, wherein at least one notch (115) are disposed on the side of the body (111), and the light-emitting component (140) is disposed in the notch (115).

12. The light-guide board (110) as claimed in Claim 8, wherein the light-guide board (110) further includes a light-reflective layer (116), and the light-reflective layer (116) covers the surface of the body (111).

13. The light-guide board (110) as claimed in Claim 8, wherein the material of the light-guide board (110) is made of acrylic or optical plastic.

14. The light-guide board (110) as claimed in Claim 8, wherein the structure of the body (111) and the light-guide structures (112) is a monolithic structure.
